# EUROPEAN PATENT APPLICATION

(11) **EP 4 826 856 A1**
(43) Date of publication of application: **21.10.2026**
(21) Application number: 25837576.5
(22) Date of filing: 26.06.2025
(51) Int. Cl.: H01M 10/658, H01M 10/04, H01M 50/178, H01M 50/211, C08K 3/016

(54) **INSULATION SHEET AND BATTERY PACK CONTAINING SAME**

(30) Priority: 10.07.2024 KR 20240091163
(71) Applicant: LG Energy Solution, Ltd., Seoul 07335 (KR)
(72) Inventor: JUNG, Kitaek, Daejeon 34122 (KR); PARK, Won Kyoung, Daejeon 34122 (KR); KIM, Younggil, Daejeon 34122 (KR)
(74) Representative: BCKIP Part mbB
(86) International application number: PCT/KR2025/008964
(87) International publication number: WO 2026/014774

(57) **Abstract**

An insulation sheet according to one embodiment of the present disclosure is an insulation sheet disposed between a first battery cell and a second battery cell, comprising: an insulation pad portion; and a packaging member that wraps around the entire outer surface of the insulation pad portion, wherein: the packaging member comprises a body surface covering the front and rear surfaces and the upper and lower surfaces of the insulation pad portion and a pair of extension surfaces covering both ends of the insulation pad portion, one end of the pair of extension surfaces is connected to the body surface covering the rear surface of the insulation pad portion, the other end of the pair of extension surfaces passes both ends of the insulation pad portion and extends to both ends of the body surface covering the front surface of the insulation pad portion, and the first battery cell is disposed between the other ends of the pair of extension surfaces, and the second battery cell is disposed on the rear surface of the insulation pad portion.

## Description

### TECHNICAL FIELD

### Cross-Reference to Related Application(s)

This application claims priority to and the benefit of Korean Patent Application no. 10-2024-0091163, filed on July 10, 2024, the disclosure of which is hereby incorporated by reference in its entirety

The present disclosure relates to an insulation sheet and a battery pack containing the same, and more particularly, to an insulation sheet disposed between mutually adjacent battery cells and a battery pack containing the same, which can appropriately dispose sections where the packaging material wrapping around the outer surface of the insulation pad portion overlaps, thereby allowing the insulation sheet to apply a uniform surface pressure to the battery cells.

### BACKGROUND

Secondary batteries which are highly applicable to various products and exhibit superior electrical properties such as high energy density, etc. are commonly used not only in portable devices but also in electric vehicles or hybrid electric vehicles driven by electrical power sources. Such a secondary battery is getting a lot of attention as a novel energy source for enhancing environment friendliness and energy efficiency, in that it has a primary advantage of remarkably reducing the use of fossil fuels, and also generates no by-products from the use of energy.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely chargeable/dischargeable, have low self-discharge rates, and have high energy density, as compared to nickel-based secondary batteries.

In general, according to the shapes of exterior cases, lithium secondary batteries may be classified into cylindrical or prismatic secondary batteries fabricated by mounting the electrode assembly in a metal can, and pouch-shaped secondary batteries fabricated by mounting the electrode assembly in a pouch made of an aluminum laminate sheet.

Meanwhile, although a secondary battery has excellent electrical properties, components constituting the battery, such as an active material or an electrolyte, may induce decomposition reactions under abnormal operation conditions, such as overcharge, overdischarge, exposure to high temperatures, or electrical short circuit, thereby generating heat and gas. As a result, there is a problem that the so-called swelling phenomenon occurs, in which the secondary battery expands. The swelling phenomenon accelerates decomposition reaction, which may also cause explosion or ignition of the secondary battery due to thermal runaway.

In addition, the thermal runaway phenomenon occurring in some battery cells may cause a thermal propagation phenomenon that induces thermal runaway in other adjacent battery cells. In order to minimize this heat propagation phenomenon or to delay it for a predetermined period of time, a pad having thermal insulation properties may be disposed between the battery cells. At this time, an aerogel pad, which generally has the best thermal insulation performance, may be disposed between the battery cells.

However, while the aerogel pad has excellent thermal insulation performance due to their material properties, they have poor mechanical strength. In this respect, the outer surface of the aerogel pad needs to be covered with a separate packaging material. At this time, an overlap section of the packaging material occurs in some regions of the aerogel, and if the overlap section of the packaging material makes contact with the battery cell, there may be a problem that the surface pressure of the aerogel pad on the battery cells is not uniform.

Therefore, there is an increasing need to develop an insulation pad and a battery pack containing the same that prevents the overlapping section of the packaging material formed in a portion of the aerogel from coming into contact with the battery cells.

### DETAILED DESCRIPTION OF THE INVENTION

### Technical Problem

It is an object of the present disclosure to provide an insulation sheet disposed between mutually adjacent battery cells and a battery pack containing the same, which can appropriately dispose sections where the packaging material wrapping around the outer surface of the insulation pad portion overlaps, thereby allowing the insulation sheet to apply a uniform surface pressure to the battery cells.

The objects of the present disclosure are not limited to the aforementioned objects, and other objects not described herein should be clearly understood by those skilled in the art from the following detailed description and the accompanying drawings.

### Technical Solution

According to an aspect of the present disclosure, there is provided an insulation sheet disposed between a first battery cell and a second battery cell, comprising: an insulation pad portion; and a packaging member that wraps around the entire outer surface of the insulation pad portion, wherein the packaging member comprises a body surface covering the front and rear surfaces and the upper and lower surfaces of the insulation pad portion and a pair of extension surfaces covering both ends of the insulation pad portion, wherein one end of the pair of extension surfaces is connected to the body surface covering the rear surface of the insulation pad portion, wherein the other end of the pair of extension surfaces passes both ends of the insulation pad portion and extends to both ends of the body surface covering the front surface of the insulation pad portion, and wherein the first battery cell is disposed between the other ends of the pair of extension surfaces, and the second battery cell is disposed on the rear surface of the insulation pad portion.

The packaging member disposed between the first battery cell and the insulation pad portion and between the second battery cell and the insulation pad portion, respectively, may comprise at least two layers or less.

The first battery cell and the second battery cell may be disposed at the same positions on the front and rear surfaces of the insulation pad portion, respectively.

The first battery cell and the second battery cell may have the same size as each other.

The area between the other ends of the pair of extension surfaces on the front surface of the insulation pad portion may be greater than or equal to the area of one surface of the first battery cell that makes contact with the front surface of the insulation pad portion.

The first battery cell and the second battery cell each comprise a body portion having an electrode assembly built therein, and electrode tabs that are electrically connected to the electrode assembly may be respectively located on at least one end of the first battery cell and the second battery cell.

The body portion of the first battery cell is disposed between the other ends of the pair of extension surfaces, and the electrode tabs of the first battery cell may pass the other ends of the pair of extension surfaces and extend toward both ends of the insulation pad portion.

The electrode tab comprises a positive electrode tab and a negative electrode tab, and the positive electrode tab and the negative electrode tab, each being electrically connected to the electrode assembly, may be respectively located at both ends of the first battery cell and the second battery cell.

The body surface comprises a first body surface, a second body surface, and a third body surface, which are connected to each other while extending in the width direction of the insulation pad portion, the pair of extension surfaces extend from both ends of one of the first body surface, the second body surface, and the third body surface, the front surface of the insulation pad portion is seated on one of the first body surface, the second body surface, and the third body surface, and the rest are folded in a direction that sequentially covers the front and rear surfaces and the upper and lower surfaces of the insulation pad portion, and the pair of extension surfaces may be folded in a direction that covers both ends of the insulation pad portion.

The front surface of the insulation pad portion may be seated on the second body surface, and the first body surface and the third body surface may be sequentially folded in a direction that covers the front and rear surfaces of the insulation pad portion, respectively.

The front surface of the insulation pad portion is seated on the second body surface, and the first body surface is folded in a direction that covers the rear surface of the insulation pad portion, the first body surface is folded in a direction toward the third body surface in a state where the first body surface covers the rear surface of the insulation pad portion, and the pair of extension surfaces may extend from both ends of the third body surface and cover both ends of the second body surface.

The insulation pad portion is made of an aerogel pad, and the packaging member may comprise a PET film.

The packaging member may be coated with a flame retardant material on the upper and lower surfaces of the PET film, and a flame retardant adhesive may be coated onto the surface of the upper and lower surfaces of the PET film that covers the insulation pad portion.

According to another aspect of the present disclosure, there is provided a battery pack containing the above-mentioned insulation sheet, wherein the battery pack may comprise a plurality of battery cells; and at least one insulation sheet that is disposed between a pair of battery cells located adjacent to each other among the plurality of battery cells.

### Advantageous Effects

According to specific embodiments, the present disclosure provides an insulation sheet and a battery pack containing the same, which can appropriately dispose sections where the packaging material wrapping around the outer surface of the insulation pad portion overlaps, thereby allowing the insulation sheet to apply a uniform surface pressure to the battery cells.

In particular, the present disclosure is configured so that no overlapping sections are disposed in the portions of the packaging member wrapping around the outer surface of the insulation pad portion that contact the battery cells, thereby allowing the insulation sheet to apply more uniform surface pressure to the battery cells.

In addition, in the insulation sheet of the present disclosure, the size of the portion excluding the overlapping section of the packaging member for the insulation pad portion is equal to or larger than the size of the battery cells, thereby allowing the insulation sheet to apply more uniform surface pressure to the battery cells.

The effects of the present disclosure are not limited to the effects mentioned above, and additional other effects not described above will be clearly understood from the detailed description and the accompanying drawings by those skilled in the art.

### BRIEF DESCRIPTION OF THE DRAWINGS

FIG. 1 is a perspective view illustrating an insulation sheet disposed between a pair of mutually adjacent battery cells according to one embodiment of the present disclosure.
FIG. 2 is an exploded perspective view illustrating a pair of mutually adjacent battery cells and an insulation sheet according to FIG. 1.
FIG. 3 is a cross-sectional view of an insulation sheet disposed between a pair of mutually adjacent battery cells according to FIG. 1 taken along the a-a' axis.
FIG. 4 is a perspective view illustrating an insulation member of FIG. 1.
FIGS. 5 to 8 are diagrams illustrating a form in which an insulation pad portion included in the insulation member of FIG. 1 is covered by a packaging member.
FIG. 9 is a cross-sectional view taken along the b-b' axis of FIG. 4.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

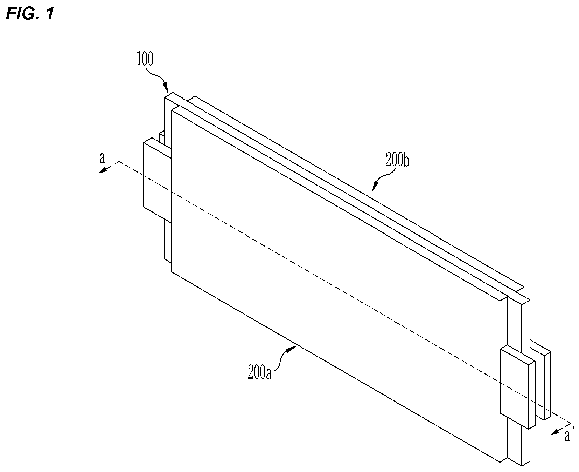

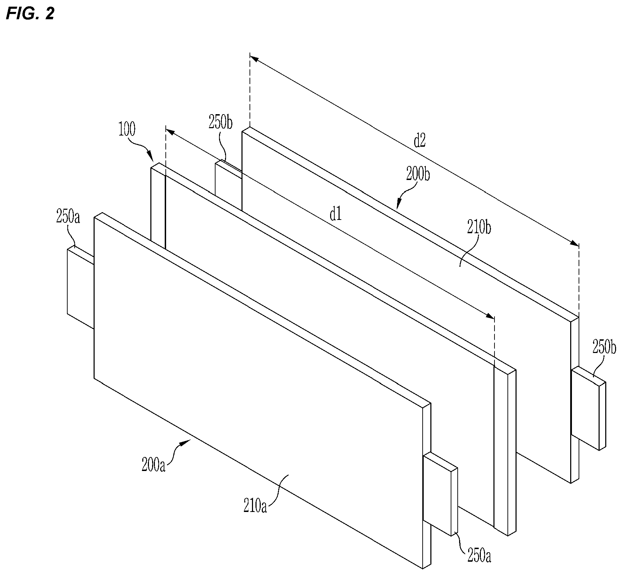

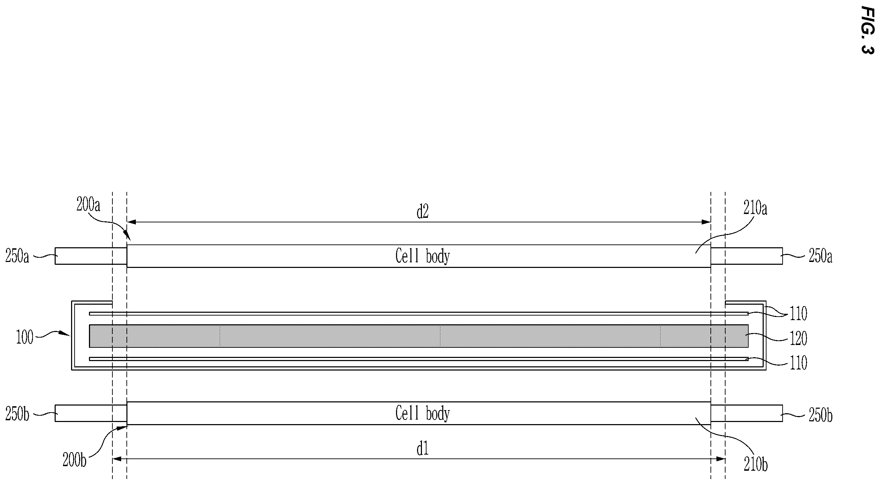

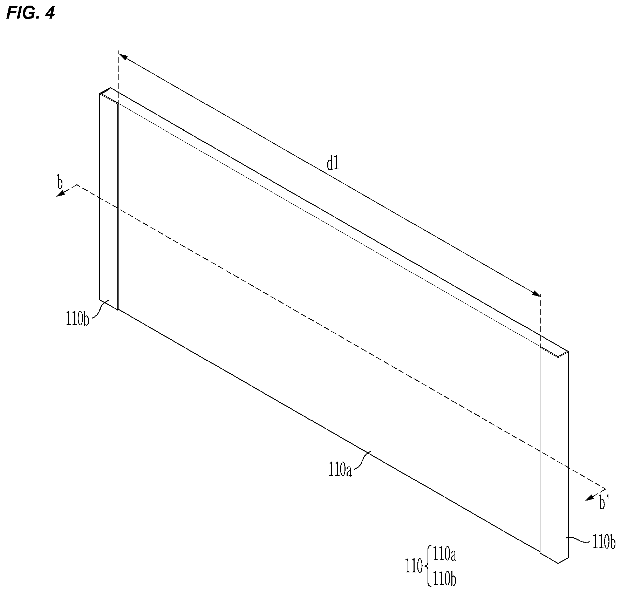

FIG. 1 is a perspective view illustrating an insulation sheet disposed between a pair of mutually adjacent battery cells according to one embodiment of the present disclosure. FIG. 2 is an exploded perspective view illustrating a pair of mutually adjacent battery cells and an insulation sheet according to FIG. 1. FIG. 3 is a cross-sectional view of an insulation sheet disposed between a pair of mutually adjacent battery cells according to FIG. 1 taken along the a-a' axis. FIG. 4 is a perspective view illustrating an insulation member of FIG. 1.

Referring to FIGS. 1 to 3, an insulation sheet 100 according to one embodiment of the present disclosure may be disposed between a first battery cell 200a and a second battery cell 200b.

Here, the first battery cell 200a and the second battery cell 200b each include body portions 210a, 210b having an electrode assembly (not shown) built therein, and electrode tabs 250a, 250b that are electrically connected to the electrode assembly (not shown) may be respectively located on at least one end of the first battery cell 200a and the second battery cell 200b.

As an example, the first battery cell 200a and the second battery cell 200b may be pouch-type battery cells as shown in FIGS. 1 to 3. More specifically, the first body portion 210a of the first battery cell 200a may be prepared by housing an electrode assembly (not shown) in a pouch case of a laminate sheet, and then thermally fusing the sealing portion of the pouch case. In addition, in the first battery cell 200a, the first electrode tab 250a may protrude outward from at least one end of the pouch case. However, the shape of the first battery cell 200a is not limited thereto, and battery cells having shapes such as prismatic, cylindrical, etc. may also be included in the present embodiment. This can also be similarly explained for the second body portion 210b and the second electrode tab 250b of the second battery cell 200b.

As shown in FIGS. 1 to 3, a first electrode tab 250a may protrude outward at both ends of the first battery cell 200a, respectively. However, the present embodiment is not limited thereto, and can also include a case where one or more first electrode tabs 250a are located at one end of the first battery cell 200a. This can also be similarly explained for the second electrode tab 250b of the second battery cell 200b.

As shown in FIGS. 1 to 3, the insulation sheet 100 may be disposed between a plurality of battery cells 200a, 200b that are stacked so as to be electrically connected to each other, and the insulation sheet 100 may be disposed each between mutually adjacent battery cells 200a, 200b or at predetermined intervals. In this manner, the number of the insulation sheets 100 can be adjusted as needed.

Therefore, the insulation sheet 100 according to the present embodiment can effectively block heat transfer between the battery cells 200a, 200b while applying sufficient surface pressure to the battery cells 200a, 200b.

Referring to FIG. 3, the insulation sheet 100 according to the present embodiment includes an insulation pad portion 120; and a packaging member 110 that wraps around the entire outer surface of the insulation pad portion 120.

More specifically, the insulation pad portion 120 may be made of a flame retardant material having a grade of V-0 or higher, specifically a grade of V-0 or 5V, based on the UL 94 flammability standard for plastics. As an example, the insulation pad portion 120 may be made of an aerogel pad.

As an example, the packaging member 110 may include a PET film. More specifically, the packaging member 110 may be coated with a flame retardant material on the upper and lower surfaces of the PET film, and a flame retardant adhesive may be coated onto the surface of the upper and lower surfaces of the PET film that covers the insulation pad portion. Here, the flame retardant adhesive may be a silicone-based adhesive, and may be a double-sided tape or a spray-type adhesive.

Therefore, the insulation sheet 100 according to the present embodiment has an advantage in that the packaging member 110 consisting of a PET film coated with a flame retardant material wraps around the entire outer surface of the insulation pad portion 120, whereby the packaging member 110 not only supplements the rigidity of the insulation pad portion 120 in a high temperature environment but also sufficiently ensures the flame retardancy of the insulation pad portion 120.

Referring to FIGS. 3 and 4, the packaging member 110 includes a body surface 110a covering front and rear surfaces and the upper and lower surfaces of the insulation pad portion 120 and a pair of extension surfaces 110b covering both ends of the insulation pad portion 120.

More specifically, in the packaging member 110, one end of the pair of extension surfaces 110b may be formed to connect to the body surface 110a covering the rear surface of the insulation pad portion 120. In other words, in the packaging member 110, a pair of extension surfaces 110b and a body surface 110a may be configured to be integrated with each other.

Further, as shown in FIGS. 3 and 4, the other ends of the pair of extension surfaces 110b may pass both ends of the insulation pad portion 120 and respectively extend to both ends of the body surface 110a that covers the front surface of the insulation pad portion 120. That is, a pair of extension surfaces 110b may cover the entire area of the insulation pad portion 120, together with the body surface 110a.

Therefore, the insulation sheet 100 according to the present embodiment can effectively supplement the mechanical rigidity of the insulation pad portion 120 because the entire outer surface of the insulation pad portion 120 can be covered with the packaging member 110, while the insulation pad portion 120 being not exposed to the outside.

In addition, in the packaging member 110, a pair of extension surfaces 110b cover both ends of the body surface 110a without any overlapping sections that may further occur, whereby the assembling properties and productivity of the insulation sheet 100 can be further improved, and a thickness deviation cannot occur in the portion where the pair of extension surfaces 110b are located.

Further, referring to FIGS. 1, 3 and 4, in the insulation sheet 100 according to the present embodiment, the first battery cell 200a may be disposed on the front surface of the insulation sheet 100, and the second battery cell 200b may be disposed on the rear surface of the insulation sheet 100. In particular, the first battery cell 200a may be disposed between the other ends of a pair of extension surfaces 110b.

Here, the first battery cell 200a and the second battery cell 200b may be disposed at the same positions on the front and rear surfaces of the insulation pad portion 120, respectively. As an example, the first battery cell 200a and the second battery cell 200b may have the same size as each other. As another example, the first battery cell 200a and the second battery cell 200b may be the same battery cells as each other.

The area between the other ends of a pair of extension surfaces 110b on the front surface of the insulation pad portion 120 may be greater than or equal to the area of one surface of the first battery cell 200a that makes contact with the front surface of the insulation pad portion 120. As an example, as shown in FIGS. 3 and 4, the distance d1 between the other ends of a pair of extension surfaces 110b may be greater than or equal to the length d2 of the first battery cell 200a.

Referring to FIG. 3, the packaging member 110 disposed between the first battery cell 200a and the insulation pad portion 120 and between the second battery cell 200b and the insulation pad portion 120, respectively, may comprise at least two layers or less. In other words, only the body surface 110a of the packaging member 110 may be disposed between the first battery cell 200a and the insulation pad portion 120 and between the second battery cell 200b and the insulation pad portion 120, and the extension surface 110b of the packaging member 110 may not be disposed.

Therefore, in the insulation sheet 100 according to the present embodiment, the packaging member 110 disposed between the battery cells 200a, 200b and the insulation pad portion 120 is minimized, and also the thickness of the packaging member 110 disposed between the battery cells 200a, 200b and the insulation pad portion 120 is constant, thereby allowing the insulation sheet 100 to apply a uniform surface pressure to the battery cells 200a, 200b.

In particular, in the insulation sheet 100 according to the present embodiment, a pair of extension surfaces 110b for covering both ends of the insulation pad portion 120 are finished at a portion that avoids between the battery cells 200a, 200b and the insulation pad portion 120, thereby minimizing the influence of the thickness deviation of the insulation sheet 100 caused by the packaging member 110 on the surface pressure provided between the insulation sheet 100 and the battery cell 200.

As an example, as shown in FIGS. 1 to 3, the insulation sheet 100 according to the present embodiment may be configured such that the first body portion 210a of the first battery cell 200a is disposed between the other ends of a pair of extension surfaces 110b, and the first electrode tab 250a of the first battery cell 200a passes the other ends of the pair of extension surfaces 110b and extends toward both ends of the insulation pad portion 120. Further, the second body portion 210b of the second battery cell 200b may be disposed on the rear surface of the insulation pad portion 120, and the second electrode tab 250b of the second battery cell 200b may extend toward both ends of the insulation pad portion 120.

Therefore, in the insulation sheet 100 according to the present embodiment, the insulation pad portion 120 and a pair of extension surfaces 110b are disposed between the first electrode tab 250a of the first battery cell 200a and the second electrode tab 250b of the second battery cell 200b, so that the insulation performance can be further ensured between the first electrode tab 250a of the first battery cell 200a and the second electrode tab 250b of the second battery cell 200b.

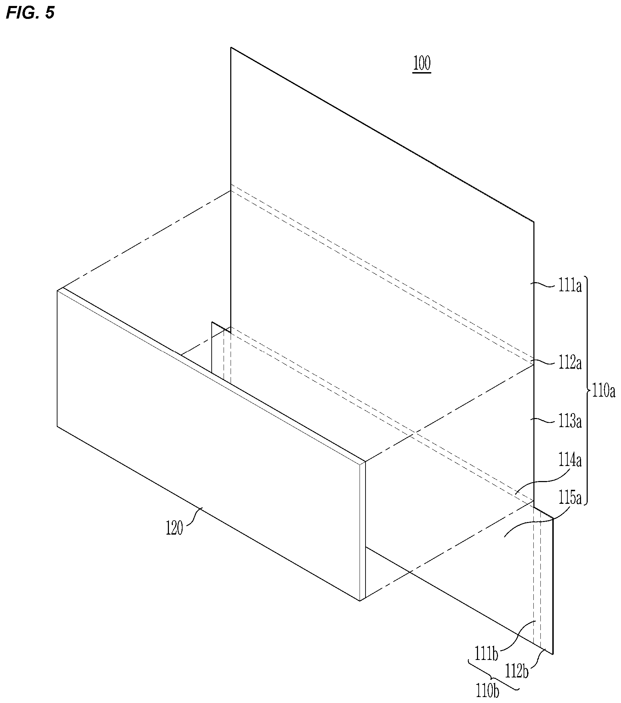

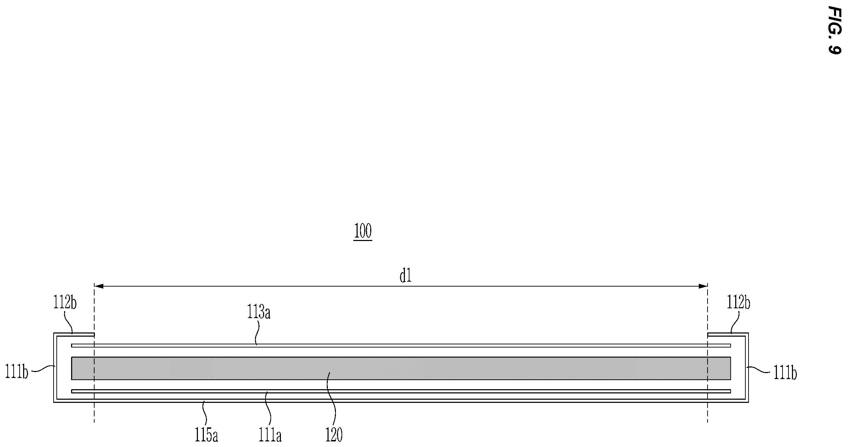

FIGS. 5 to 8 are diagrams illustrating a form in which an insulation pad portion included in the insulation member of FIG. 1 is covered by a packaging member. FIG. 9 is a cross-sectional view taken along the b-b' axis of FIG. 4.

Referring to FIG. 5, in the insulation sheet 100 according to the present embodiment, the body surface 110a may include a first body surface 111a, a second body surface 113a, and a third body surface 115a, which are connected to each other while extending in the width direction of the insulation pad portion 120. More specifically, as shown in FIG. 5, a first body connection surface 112a may be located between the first body surface 111a and the second body surface 113a, and a second body connection surface 114a may be located between the second body surface 113a and the third body surface 115a. In other words, in the body surface 110a of the packaging member 110, the first body surface 111a, the first body connection surface 112a, the second body surface 113a, the second body connection surface 114a, and the third body surface 115a may be configured to be integrated with each other.

Here, the first body surface 111a, the second body surface 113a, and the third body surface 115a may cover the front and rear surfaces of the insulation pad portion 120, respectively, and the first body connection surface 112a and the second body connection surface 114a may cover the upper and lower surfaces of the insulation pad portion 120, respectively.

The front surface of the insulation pad portion 120 may be seated on one of the first body surface 111a, the second body surface 113a, and the third body surface 115a, and the rest other than the body surface on which the front surface of the insulation pad portion 120 is seated can be sequentially folded in a direction that covers the front and rear surfaces and the upper and lower surfaces of the insulation pad portion 120.

As an example, as shown in FIG. 5, the front surface of the insulation pad portion 120 may be seated on the second body surface 113a. Subsequently, the first body surface 111a and the third body surface 115a may be sequentially folded in a direction that covers the front and rear surfaces of the insulation pad portion 120, respectively.

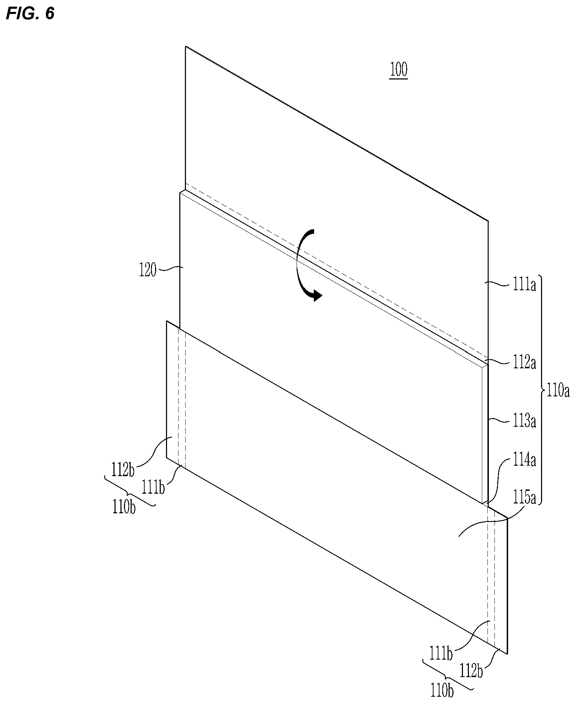

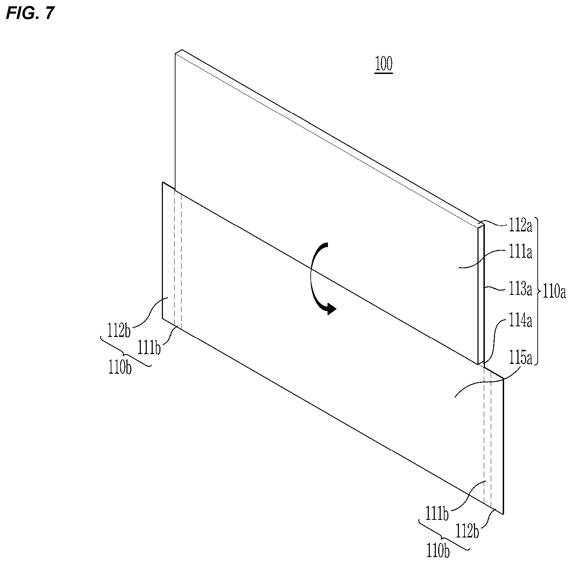

As an example, as shown in FIG. 6, the first body surface 111a may be folded in a direction that covers the rear surface of the insulation pad portion 120 with respect to the insulation pad portion 120 seated on the second body surface 113a. At this time, the upper surface of the insulation pad portion 120 may be covered with the first body connection surface 112a. Subsequently, as shown in FIG. 7, the third body surface 115a may be folded in a direction toward the first body surface 111a, in a state where the first body surface 111a covers the rear surface of the insulation pad portion 120.

Here, a pair of extension surfaces 110b may be extended from both ends of one of the first body surface 111a, the second body surface 113a, and the third body surface 115a. At this time, the pair of extension surfaces 110b may be folded in a direction that covers both ends of the insulation pad portion 120. As an example, as shown in FIGS. 5 to 7, a pair of extension surfaces 110b may be extended from both ends of the third body surface 115a.

More specifically, as shown in FIGS. 5 to 7, a pair of extension surfaces 110b each include an extension connection surface 111b connected to a third body surface 115a and an extension cover surface 112b covering a second body surface 113a. In other words, in a pair of extension surfaces 110b of a packaging member 110, the third body surface 115a, the extension connection surface 111b, and the extension cover surface 112b may be configured to be integrated with each other.

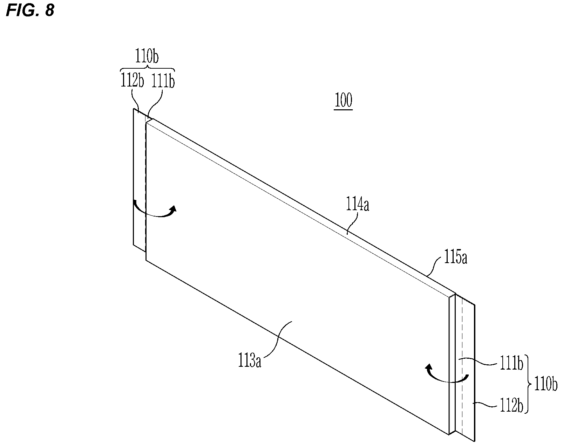

After the front and rear surfaces and the upper and lower surfaces of the insulation pad portion 120 are covered by the body surface 110a as shown in FIGS. 5 to 7, the other end of the pair of extension surfaces 110b may cover both ends of the second body surface 113a as shown in FIGS. 8 and 9.

Therefore, the insulation sheet 100 according to the present embodiment may be covered with the packaging member 110 while the entire outer surface of the insulation pad portion 120 being not exposed to the outside, thereby effectively supplementing the mechanical rigidity of the insulation pad portion 120. In addition, as shown in FIG. 9, the shape of the packaging member 110 covering the insulation pad portion 120 minimizes the overlapping section on the insulation pad portion 120, and also the folding structure of the packaging member 110 is simplified, which offers the advantage of further improving the assembling properties and productivity of the insulation sheet 100.

A battery pack according to another embodiment of the present disclosure is a battery pack containing the above-mentioned insulation sheet 100, wherein the battery pack comprises: a plurality of battery cells; and at least one insulation sheet that is disposed between a pair of battery cells located adjacent to each other among the plurality of battery cells 200a, 200b.

Therefore, in the battery pack according to the present embodiment, the insulation sheet 100 disposed between a pair of battery cells 200a, 200b that are located adjacent to each other provides a uniform surface pressure to the battery cells 200a, 200b, so that the heat propagation phenomenon between the battery cells can be more effectively minimized or delayed for a predetermined period of time.

The battery module and the battery pack including the same as previously mentioned may be applied to various devices. Specifically, such devices can be applied to transportation vehicles such as an electric bike, an electric vehicle, and a hybrid electric vehicle. However, the present disclosure is not limited thereto, and can be applied to various devices capable of using a battery module and a battery pack including the same, which also falls within the scope of the present disclosure.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: insulation sheet
110: packaging member
110a: body surface
111a: first body surface
112a: first body connection surface
113a: second body surface
114a: second body connection surface
115a: third body surface
110b: extension surface
111b: extension connection surface
112b: extension cover surface
120: insulation pad portion
200a: first battery cell
200b: second battery cell

## Claims

1. An insulation sheet disposed between a first battery cell and a second battery cell, comprising:
an insulation pad portion; and
a packaging member that wraps around an entire outer surface of the insulation pad portion,
wherein the packaging member comprises a body surface covering front and rear surfaces and an upper and lower surfaces of the insulation pad portion and a pair of extension surfaces covering both ends of the insulation pad portion,
wherein one end of the pair of extension surfaces is connected to the body surface covering the rear surface of the insulation pad portion,
wherein the other ends of the pair of extension surfaces opposite to the one end pass both ends of the insulation pad portion and respectively extend to both ends of the body surface covering the front surface of the insulation pad portion, and
wherein the first battery cell is disposed between the other ends of the pair of extension surfaces, and the second battery cell is disposed on the rear surface of the insulation pad portion.

2. The insulation sheet according to claim 1, wherein:
the packaging member disposed between the first battery cell and the insulation pad portion and between the second battery cell and the insulation pad portion, respectively, comprise at least two layers or less.

3. The insulation sheet according to claim 1, wherein:
the first battery cell and the second battery cell are disposed at the same positions on the front and rear surfaces of the insulation pad portion, respectively.

4. The insulation sheet according to claim 3, wherein:
the first battery cell and the second battery cell have the same size as each other.

5. The insulation sheet according to claim 1, wherein:
the area between the other ends of the pair of extension surfaces on the front surface of the insulation pad portion is greater than or equal to the area of one surface of the first battery cell that makes contact with the front surface of the insulation pad portion.

6. The insulation sheet according to claim 1, wherein:
the first battery cell and the second battery cell each comprise a body portion having an electrode assembly built therein, and
electrode tabs that are electrically connected to the electrode assembly are respectively located on at least one end of the first battery cell and the second battery cell.

7. The insulation sheet according to claim 6, wherein:
the body portion of the first battery cell is disposed between the other ends of the pair of extension surfaces, and
the electrode tabs of the first battery cell passes the other ends of the pair of extension surfaces and extends toward both ends of the insulation pad portion.

8. The insulation sheet according to claim 6, wherein:
the electrode tab comprises a positive electrode tab and a negative electrode tab, and
the positive electrode tab and the negative electrode tab, each being electrically connected to the electrode assembly, are respectively located at both ends of the first battery cell and the second battery cell.

9. The insulation sheet according to claim 1, wherein:
the body surface comprises a first body surface, a second body surface, and a third body surface, which are connected to each other while extending in the width direction of the insulation pad portion,
the pair of extension surfaces extend from both ends of one of the first body surface, the second body surface, and the third body surface,
the front surface of the insulation pad portion is seated on one of the first body surface, the second body surface, and the third body surface, and the rest are folded in a direction that sequentially covers the front and rear surfaces and the upper and lower surfaces of the insulation pad portion, and
the pair of extension surfaces are folded in a direction that covers both ends of the insulation pad portion.

10. The insulation sheet according to claim 9, wherein:
the front surface of the insulation pad portion is seated on the second body surface, and the first body surface and the third body surface are sequentially folded in a direction that covers the front and rear surfaces of the insulation pad portion, respectively.

11. The insulation sheet according to claim 10, wherein:
the front surface of the insulation pad portion is seated on the second body surface, and the first body surface is folded in a direction that covers the rear surface of the insulation pad portion,
the third body surface is folded in a direction toward the first body surface in a state where the first body surface covers the rear surface of the insulation pad portion, and
the pair of extension surfaces extend from both ends of the third body surface and cover both ends of the second body surface.

12. The insulation sheet according to claim 1, wherein:
the insulation pad portion is made of an aerogel pad, and
the packaging member comprises a PET film.

13. The insulation sheet according to claim 12, wherein:
the packaging member is coated with a flame retardant material on an upper and lower surfaces of the PET film, and
a flame retardant adhesive is coated onto a surface of the upper and lower surfaces of the PET film that covers the insulation pad portion.

14. A battery pack containing the insulation sheet according to claim 1, wherein the battery pack comprises:
a plurality of battery cells; and
at least one insulation sheet that is disposed between a pair of battery cells located adjacent to each other among the plurality of battery cells.
